# EUROPEAN PATENT APPLICATION

(11) **EP 4 671 825 A1**
(43) Date of publication of application: **31.12.2025**
(21) Application number: 25180401.9
(22) Date of filing: 03.06.2025
(51) Int. Cl.: G01S 13/88, G08B 21/02

(54) **REMINDING METHOD, DESK, DEVICE, CONTROLLER, AND PRODUCT**

(30) Priority: 27.06.2024 CN 202410850780
(71) Applicant: Robert Bosch GmbH, 70442 Stuttgart (DE)
(72) Inventor: WANG, Kan (Asher), Shanghai, 200335 (CN); Wang, Kai (Carrey), Shanghai, 200335 (CN)

(57) **Abstract**

Embodiments of the present disclosure relate to reminder methods, desks, devices, controllers, and computer program products. The method includes determining the centroid of a user utilizing a desk by means of a millimeter-wave radar. The method further includes determining the posture of the user based on the centroid, and determining a first duration for which the user maintains the posture. The method further includes, in response to the first duration exceeding a time threshold, providing a reminder to the user. According to the method of the present disclosure, by calculating the centroid of a user utilizing the desk, the user's posture can be accurately determined, thereby enabling accurate reminders to be provided to the user.

## Description

### Technical Field

The present disclosure relates to the field of data processing, and more specifically, to a reminder method, desk, device, controller, and computer program product.

### Background

With the changing work patterns in modern society, indoor work has become the norm, and the time people spend sitting continuously in front of computers has increased significantly. Prolonged sedentary behavior has been scientifically proven to be associated with various health issues, including cervical spondylosis, back pain, obesity, cardiovascular diseases, and more. In response to these health challenges and to promote workplace wellness, a variety of innovative products have emerged, aimed at reducing sedentary time and improving the comfort and health of employees in the work environment. Among these, anti-sedentary desks have become a popular solution.

### Summary of the Invention

Embodiments of the present disclosure provide a reminder method, desk, device, controller, and computer program product. In a first aspect of the present disclosure, a reminder method is provided. The method includes determining the centroid of a user utilizing a desk by means of a millimeter-wave radar. The method further includes determining the posture of the user based on the centroid, and determining a first duration for which the user maintains the posture. The method further includes, in response to the first duration exceeding a time threshold, providing a reminder to the user.

In a second aspect of the present disclosure, a device is provided. The device comprises a centroid determination unit configured to determine the centroid of a user utilizing a desk by means of a millimeter-wave radar; a posture determination unit configured to determine the user's posture based on the centroid; a time determination unit configured to determine a first duration for which the user maintains the posture; and a reminder unit configured to provide a reminder to the user in response to the first duration exceeding a time threshold.

In a third aspect of the present disclosure, a controller is provided, comprising: at least one processor; and a memory coupled to the at least one processor and having instructions stored thereon, which, when executed by the at least one processor, cause the controller to perform the method according to the first aspect of the present disclosure.

In a fourth aspect of the present disclosure, a computer program product is provided, which is tangibly stored on a non-transitory computer-readable medium and comprises machine-executable instructions, which, when executed, cause a machine to perform the method according to the first aspect of the present disclosure.

In a fifth aspect of the present disclosure, a computer-readable storage medium is provided, having machine-executable instructions stored thereon, which, when executed by a processor, implement the method according to the first aspect of the present disclosure.

In a sixth aspect of the present disclosure, a desk is provided, comprising a controller; a millimeter-wave radar connected to the controller and configured to emit millimeter waves toward a user and receive reflected millimeter waves; and a speaker connected to the controller and configured to play audio. The controller is configured to: determine the centroid of a user utilizing the desk by means of the millimeter-wave radar; determine the posture of the user based on the centroid; determine a first duration for which the user maintains the posture; and in response to the first duration exceeding a time threshold, provide a reminder to the user via the speaker.

It should be understood that the content described in the Summary of the Invention section is not intended to define the key or essential features of the embodiments of the present disclosure, nor is it intended to limit the scope of the present disclosure. Other features of the present disclosure will become readily apparent from the following description.

### Brief Description of the Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.
FIG. 1A is a schematic diagram of an example environment in which multiple embodiments of the present disclosure may be implemented;
FIG. 1B is an architectural diagram of a reminder method according to an embodiment of the present disclosure;
FIG. 2 is a flowchart of a reminder method according to an embodiment of the present disclosure;
FIG. 3A is a block diagram of a reminder method according to an embodiment of the present disclosure;
FIG. 3B is a block diagram of a reminder method according to another embodiment of the present disclosure;
FIG. 4A is a process diagram of adjusting desk height according to an embodiment of the present disclosure;
FIG. 4B is a block diagram of a reminder method according to another embodiment of the present disclosure;
FIG. 5 is a schematic diagram of a reminder device according to an embodiment of the present disclosure; and
FIG. 6 is a schematic block diagram of an example device suitable for implementing embodiments of the present disclosure.

In the various accompanying drawings, the same or corresponding numbers represent the same or corresponding portions.

### Detailed Description of the Embodiments

The examples of the present disclosure will be described in further detail below with reference to the accompanying drawings. Although certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples disclosed herein, the term "comprises" and similar terms should be understood as open-ended inclusion, meaning "including but not limited to". The term "based on" should be understood as "at least partially based on". The term "one embodiment" or "the embodiment" should be understood as "at least one embodiment". The terms "first", "second", etc., can refer to different or the same objects. Other explicit and implicit definitions may be included below.

In the prior art, sensors such as infrared sensors and ultrasonic sensors are commonly used to detect whether a person is present in front of a desk, and to issue reminders based on the duration of the person's presence. These sensors are primarily used to determine the presence of a person, but the information they rely on is overly coarse, resulting in inaccurate reminders.

To address this, the present disclosure proposes a reminder method, which includes determining the centroid of a user utilizing a desk by means of a millimeter-wave radar. The method further includes determining the posture of the user based on the centroid, and determining a first duration for which the user maintains the posture. The method further includes, in response to the first duration exceeding a time threshold, providing a corresponding reminder to the user. According to the method of the present disclosure, the centroid of the user utilizing the desk is calculated using a millimeter-wave radar, making full use of the information from a greater number of points on the user's body, thereby enabling accurate determination of the user's posture and providing more precise reminders tailored to the user.

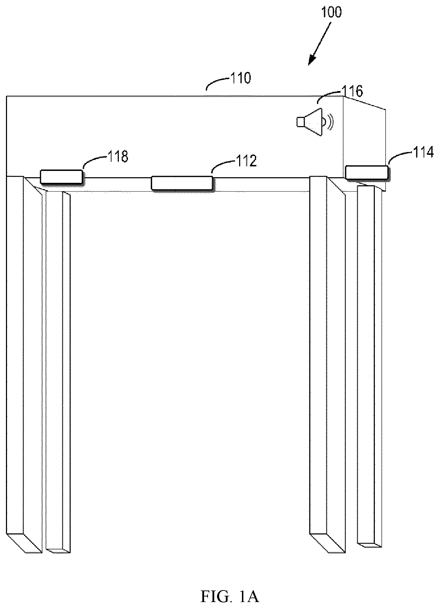

The embodiments of the present disclosure will be described in detail below with reference to the accompanying drawings, wherein FIG. 1A is a schematic diagram of an example environment 100 in which multiple embodiments of the present disclosure may be implemented. As shown in FIG. 1A, the example environment 100 includes a desk 110, a controller 112, a millimeter-wave radar 114, and a speaker 116. The millimeter-wave radar 114 is connected to the controller 112 and is capable of emitting millimeter waves toward the user and receiving the reflected millimeter waves. The speaker 116 is connected to the controller 112 and is capable of playing audio. The millimeter-wave radar 114 may be a radar operating in the millimeter-wave band. Millimeter waves refer to electromagnetic waves in the frequency domain of 30 to 300 GHz (wavelength of 1 to 10 mm). The wavelength of millimeter waves is between that of microwaves and centimeter waves. The millimeter-wave radar 114 can distinguish and identify very small targets and can simultaneously identify multiple targets, has imaging capability, is compact in size, and offers good concealment. The operating principle of the millimeter-wave radar 114 is to emit electromagnetic waves and detect echoes to sense the presence, distance, speed, and position of targets. It has a small detection angle, and its conical beam enables more precise detection.

During use of the desk 110, the controller 112 can perform the following operations. The controller 112 determines the centroid of the user utilizing the desk 110 using the millimeter-wave radar 114. For example, the controller 112 may send an instruction to the millimeter-wave radar 114, instructing the millimeter-wave radar 114 to emit millimeter waves at a predetermined angle and receive the reflected millimeter waves. The millimeter-wave radar 114 can transmit the data related to the reflected millimeter waves to the controller 112, which calculates the user's centroid based on this data.

Furthermore, the controller 112 determines the user's posture based on the centroid. Since the centroid differs for different postures such as standing, sitting, or leaning, the user's current posture can be determined based on the current centroid. The controller 112 may also be equipped with a timing module (not shown) and determine, based on the timing module, the first duration for which the user maintains the posture. In response to the first duration exceeding a time threshold, the controller 112 provides a corresponding reminder to the user via the speaker 116. For example, if it is detected that the user has maintained a sitting posture for a duration that reaches the corresponding time threshold (e.g., 20 minutes), an instruction may be sent to the speaker 116 to play a reminder audio corresponding to the sitting posture, such as "You have been sitting for a long time, please stand up or take a break".

If a sensor is used only to detect the presence of a person, it cannot detect the person's posture, and the determination of presence relies only on information from a small number of points on the user's body, or even just the existence of a point, without utilizing more specific information, which is insufficiently accurate. In contrast, when the controller 112 determines the centroid of the user utilizing the desk 110 using the millimeter-wave radar 114, since the centroid integrates specific information from a larger number of points on the user's body, rather than just a few points, this approach can accurately determine the user's posture and provide accurate reminders accordingly.

In further embodiments, the desk 110 in FIG. 1A may be a height-adjustable desk, wherein the desk 110 further includes a lifting column connected to a controller. In this embodiment, the controller 112 is further configured to, in response to the posture being a sitting posture and the user maintaining the sitting posture for a first duration exceeding a time threshold corresponding to the sitting posture, control the lifting column to increase the height of the desk 114.

It should be noted that the controller 112 may comprise independent hardware devices to perform the above operations within the desk 110, or may receive the results of such operations from external devices of the desk 110 via a communication module. In other words, the above operations may be implemented in a cloud computing environment. The controller 112 may have an independent physical server, a server cluster composed of multiple physical servers, or a distributed system. It may also be connected to cloud servers providing basic cloud computing services such as cloud services, cloud databases, cloud computing, cloud functions, cloud storage, network services, cloud communications, middleware services, domain name services, security services, as well as big data and artificial intelligence platforms, to accomplish the above operations. The desk 110, for example, may be used by users who need to work while sitting for extended periods, such as office workers, students, etc., to remind them to adjust their posture in a timely manner and avoid health risks associated with prolonged sitting or standing.

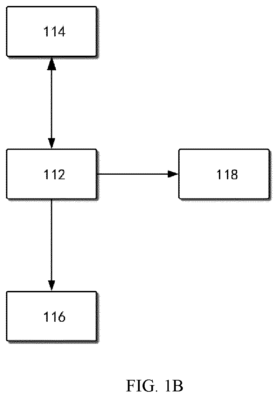

FIG. 1B is an architectural diagram of a reminder method according to an embodiment of the present disclosure. This reminder method can be applied to the desk 110 in FIG. 1A, and is described herein in conjunction with the apparatus in FIG. 1A. As shown in FIG. 1B, the controller 112 establishes communication connections with the millimeter-wave radar 114 and the speaker 116, respectively. In this embodiment, the timer 118 is shown as a separate component, which establishes a communication connection with the controller 112. In this embodiment, the controller 112 sends instructions to the millimeter-wave radar 114, requesting the millimeter-wave radar 114 to determine the centroid of the user utilizing the desk. The millimeter-wave radar 114 transmits the scan data of the reflected millimeter waves to the controller 112. The controller 112 can fully utilize this scan data to determine the centroid of the user utilizing the desk. The controller 112 can also determine the user's posture based on the centroid, while sending instructions to the timer 118 to start timing. The controller 112 may determine the first duration for which the user maintains the posture. In response to the first duration exceeding a time threshold, the controller 112 may send instructions to the speaker 116, requesting the speaker 116 to provide a corresponding reminder to the user.

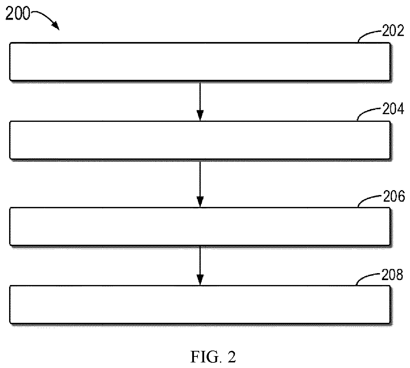

The above description in conjunction with FIGs. 1A and 1B illustrates an example environment 100 and the architecture of the reminder method in which embodiments of the present disclosure may be implemented. A flowchart of the reminder method 200 according to an embodiment of the present disclosure will be described below with reference to FIG. 2.

At block 202, the centroid of the user utilizing the desk is determined using a millimeter-wave radar. As described above, the millimeter-wave radar detects the distance and orientation of the user from the desk by emitting electromagnetic waves and detecting the echoes. The centroid of the user refers to the balance point of the mass distribution of the user in three-dimensional space. Specifically, it is the point at which the resultant force of gravity on all parts of the human body acts, i.e., the point where the body's weight is concentrated. Determining the centroid requires integrating information and mass from multiple points on the user's body, and thus can fully utilize the millimeter waves reflected back and received by the millimeter-wave radar.

At block 204, the user's posture is determined based on the centroid. The position of the centroid varies with different postures. The height of the centroid in various postures generally falls within a certain range, which can be used as preset thresholds. By comparing the height of the user's centroid with the ranges corresponding to each posture, it can be determined which posture the user is currently in. For example, the centroid in a standing posture is higher than that in a sitting posture. The user's posture may include sitting, standing, and other postures.

At block 206, the first duration for which the user maintains the posture is determined. For example, the millimeter-wave radar may be continuously used to determine the user's centroid and posture, thereby determining the first duration for which the user maintains the posture. For example, the user's posture may be determined every 30 seconds. During this first duration, the user remains in the same posture in front of the desk. To reduce misjudgment, when a change in the user's posture is detected (e.g., from sitting to standing), the next detection cycle is not awaited; instead, the user's current posture is re-detected in real time (e.g., within no more than 3 seconds). If the posture is still sitting, it is determined that the user has continuously maintained the sitting posture. If it is now standing, it is determined that the user's posture has changed. In some embodiments, the first duration may be 20 minutes, 30 minutes, or 40 minutes.

At block 208, in response to the first duration exceeding the time threshold, a reminder is provided to the user. For example, a pre-stored audio may be played as a reminder. In some embodiments, different reminders may be provided for different postures. Furthermore, different time thresholds may be set for different postures; for example, the time threshold corresponding to sitting may be 50 minutes, and that for standing may be 30 minutes.

In the reminder method of the present disclosure, by using a millimeter-wave radar to calculate the centroid of the user utilizing the desk, information from multiple points on the user's body is fully utilized, enabling accurate determination of the user's posture and thus providing accurate reminders to the user.

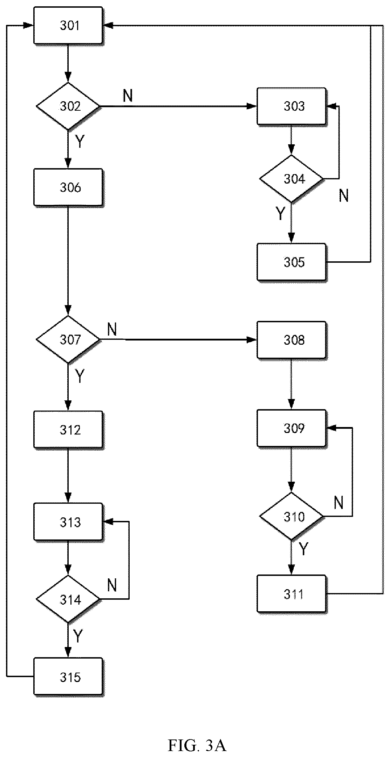

FIG. 3A is a block diagram of a reminder method according to an embodiment of the present disclosure. A point cloud 301 of the user collected by the millimeter-wave radar on the desk is acquired. For example, the millimeter-wave radar on the desk emits electromagnetic waves toward the front of the desk and receives the reflected electromagnetic waves, thereby obtaining scan data. The millimeter-wave radar transmits the scan data to the controller, which may generate the user's point cloud 301 based on the scan data. The millimeter-wave radar data is often provided in polar coordinates, containing distance (r) and angle (θ) parameters. The distance is the distance between the user and the radar, and the angle is the azimuth of the user relative to the radar. Therefore, if the millimeter-wave radar data is already in this format, it is already in polar coordinates, and the point cloud can be generated by converting these data to Cartesian coordinates.

At 302, it is determined whether the user is present based on the point cloud 301. If only a small amount of electromagnetic waves are reflected back, resulting in a sparse point cloud, it can be determined that the user is not present. If the point cloud does not conform to the human contour, it may also be determined that the user is not present. The absence of the user indicates that the user has been reminded to take a break. Upon determining that the user is not present, the user's departure time 303 (i.e., the second duration) may be timed. At 304, it is determined whether the user's departure time has reached a third threshold, which indicates the required duration for the user to be away (e.g., for a break). If the threshold is reached, then at 305, the user's departure time is reset to zero, and the process proceeds to 301. Resetting to zero means that the user has satisfied the completion condition for the break and may be permitted to return to use the desk. If the threshold is not reached, the process returns to 303 to continue timing.

If the user is detected to be present, then at 306, the centroid of the user using the desk is determined based on the point cloud 301. In some embodiments, the point cloud is denoised, for example, by removing points in the point cloud that do not belong to the user. This embodiment further includes determining the user's centroid based on the average value of the heights of the points in the denoised point cloud. In some embodiments, the user's total mass may be obtained in advance, and the mass of each body part of the user is calculated in combination with the typical human body mass distribution. For example, the head accounts for approximately 8% of the total mass, the chest region (including upper limbs) accounts for approximately 33% of the total mass, the waist and lower limb region accounts for approximately 44% of the total mass, and so on. In this embodiment, the volume of each body part is further determined based on the coordinates of the points in the point cloud 301. This embodiment also includes determining the density of each body part based on the mass and volume of each body part. Using density as an index, the mass weight of each point in the point cloud 301 corresponding to each body part is determined, and this weight is applied to the coordinates of the corresponding points. Based on the point cloud 301 and in combination with the mass weights calculated for each point, the user's centroid can be computed. This embodiment fully utilizes the spatial and mass distribution of the points in the user's point cloud 301 to calculate the centroid, thereby improving the accuracy of centroid calculation and enabling accurate reminders to be provided to the user.

At 307, the user's posture is determined. If the centroid is greater than the first standing posture threshold and less than the second standing posture threshold, the user's posture is determined to be standing 308. If the centroid is greater than the first sitting posture threshold and less than the second sitting posture threshold, the posture is determined to be sitting 312. The values of the first and second standing posture thresholds and the first and second sitting posture thresholds may be preset. Statistical data of the user population may be used, for example, by setting the centroid height corresponding to the minimum standing value as the first standing posture threshold, the centroid height corresponding to the maximum standing value as the second standing posture threshold, the centroid height corresponding to the minimum sitting value as the first sitting posture threshold, and the centroid height corresponding to the maximum sitting value as the second sitting posture threshold. This can improve the accuracy of posture determination, thereby enhancing the accuracy of reminders provided.

When the user's posture is determined to be standing 308, timing for the user's standing posture may begin at 309, and the duration for which the user maintains the standing posture is determined. At 310, it is determined whether this duration exceeds the time threshold corresponding to the standing posture (e.g., 30 minutes). If not, the process returns to 309 to continue timing. If so, then at 311, the duration is reset to zero, a reminder corresponding to the standing posture is issued to the user, and the process proceeds to 301. In some embodiments, the reminder corresponding to the standing posture includes a pre-stored reminder audio (i.e., first reminder audio), for example, "You have been standing for 30 minutes, please adjust your posture". In some embodiments, the desk is a height-adjustable desk. In addition to providing reminder audio corresponding to the standing posture, when it is determined that the user's posture is standing and the duration exceeds the time threshold corresponding to the standing posture, the height of the height-adjustable desk is also lowered. By lowering the height of the desk, the user is forced to be unable to work or study normally and must adjust their posture to continue using the height-adjustable desk.
This achieves the purpose of forcing the user to adjust their posture.

When the user's posture is determined to be sitting 312, timing for the user's sitting posture may begin at 313, and the duration for which the user maintains the sitting posture is determined. At 314, it is determined whether this duration exceeds the time threshold corresponding to the sitting posture (e.g., 50 minutes). If not, the process returns to 313 to continue timing. If so, then at 315, the duration is reset to zero, a reminder corresponding to the sitting posture is issued to the user, and the process proceeds to 301 to reacquire the user's point cloud data. In some embodiments, the reminder corresponding to the sitting posture includes a pre-stored reminder audio (i.e., second reminder audio), for example, "You have been sitting for 30 minutes, please adjust your posture". In some embodiments, the desk is a height-adjustable desk. In addition to providing reminder audio corresponding to the sitting posture, when it is determined that the user's posture is sitting and the duration exceeds the time threshold corresponding to the sitting posture, the height of the height-adjustable desk is also increased. By increasing the height of the desk, the user is forced to be unable to work or study normally and must adjust their posture to continue using the height-adjustable desk. This achieves the purpose of forcing the user to adjust their posture.

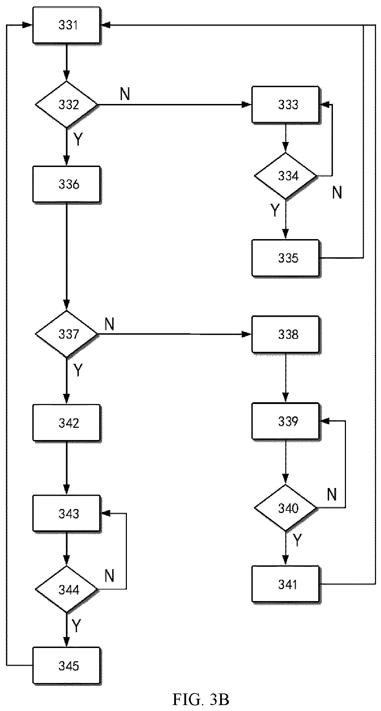

FIG. 3B is a block diagram of a reminder method according to another embodiment of the present disclosure. A point cloud 331 of the user collected by the millimeter-wave radar on the desk is acquired. For example, the millimeter-wave radar on the desk emits electromagnetic waves toward the front of the desk and receives the reflected electromagnetic waves, thereby obtaining scan data. The millimeter-wave radar transmits the scan data to the controller, which may generate the user's point cloud 331 based on the scan data.

At 332, it is determined whether the user is present based on the point cloud 331. If only a small amount of electromagnetic waves are reflected back, resulting in a sparse point cloud, it can be determined that the user is not present. If the point cloud does not conform to the human contour, it may also be determined that the user is not present. The absence of the user indicates that the user has been reminded to take a break. Upon determining that the user is not present, the user's departure time 333 (i.e., the second duration) may be timed. At 334, it is determined whether the duration of the user's absence has reached a third threshold value. If so, at 335, the user's absence time is reset to zero and the process proceeds to 331. If the threshold is not reached, the process returns to 333 to continue timing.

If the user is detected to be present, then at 336, the centroid of the user using the desk is determined based on the point cloud 331. In some embodiments, the point cloud is denoised, for example, by removing points in the point cloud that do not belong to the user.

At 337, the user's posture is determined. If the centroid is greater than the first standing posture threshold and less than the second standing posture threshold, and at the same time the current height of the desk is greater than a third standing posture threshold and less than a fourth standing posture threshold (i.e., the desk is at a height corresponding to the standing posture), the user's posture can be determined as standing 338. If the centroid is greater than the first sitting posture threshold and less than the second sitting posture threshold, and at the same time the current height of the desk is greater than the third sitting posture threshold and less than the fourth sitting posture threshold (i.e., the desk is at a height corresponding to the sitting posture), the posture can be determined as sitting 342. The values of the first and second standing posture thresholds and the first and second sitting posture thresholds may be preset. Statistical data of the user population may be used, for example, by setting the centroid height corresponding to the minimum standing value as the first standing posture threshold, the centroid height corresponding to the maximum standing value as the second standing posture threshold, the centroid height corresponding to the minimum sitting value as the first sitting posture threshold, and the centroid height corresponding to the maximum sitting value as the second sitting posture threshold. This can improve the accuracy of posture determination, thereby enhancing the accuracy of reminders provided.

When the user's posture is determined to be standing 338, timing for the user's standing posture may begin at 339, and the duration for which the user maintains the standing posture is determined. At 340, it is determined whether this duration exceeds the time threshold corresponding to the standing posture (e.g., 30 minutes). If not, the process returns to 339 to continue timing. If so, then at 341, the duration is reset to zero, a reminder corresponding to the standing posture is issued to the user, and the process proceeds to 331. In some embodiments, the reminder corresponding to the standing posture includes a pre-stored reminder audio (i.e., first reminder audio), for example, "You have been standing for 30 minutes, please adjust your posture". In some embodiments, the desk is a height-adjustable desk. In addition to providing reminder audio corresponding to the standing posture to the user, when it is determined that the user's posture is standing and the duration exceeds the time threshold corresponding to the standing posture, the height of the height-adjustable desk is also lowered. By lowering the height of the desk, the user is forced to be unable to work or study normally and must adjust their posture to continue using the height-adjustable desk. This achieves the purpose of forcing the user to adjust their posture.

When the user's posture is determined to be sitting 342, timing for the user's sitting posture may begin at 343, and the duration for which the user maintains the sitting posture is determined. At 344, it is determined whether this duration exceeds the time threshold corresponding to the sitting posture (e.g., 50 minutes). If not, the process returns to 343 to continue timing. If so, then at 345, the duration is reset to zero, a reminder corresponding to the sitting posture is issued to the user, and the process proceeds to 331 to reacquire the user's point cloud data. In some embodiments, the reminder corresponding to the sitting posture includes a pre-stored reminder audio (i.e., second reminder audio), for example, "You have been sitting for 30 minutes, please adjust your posture". In some embodiments, the desk is a height-adjustable desk. In addition to providing reminder audio corresponding to the sitting posture to the user, when it is determined that the user's posture is sitting and the duration exceeds the time threshold corresponding to the sitting posture, the height of the height-adjustable desk is also increased.

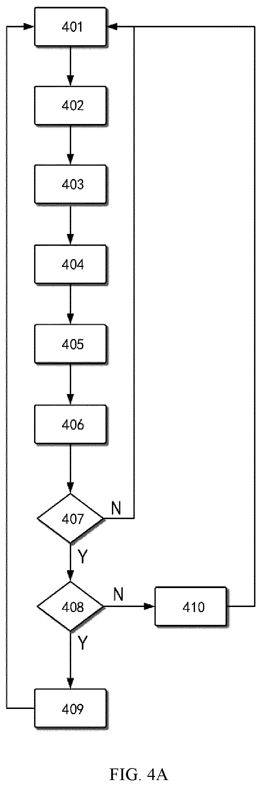

FIG. 4A is a process diagram of adjusting desk height according to an embodiment of the present disclosure. At 401, the millimeter-wave radar on the desk emits electromagnetic waves toward the front of the desk and receives the reflected electromagnetic waves, thereby obtaining scan data. The millimeter-wave radar transmits scan data to the controller, which can generate a point cloud 402 of obstacles beneath the desk based on the scan data. At 403, the height H1 of the obstacle is determined according to the point cloud 402. At 404, the height H2 of the desk is acquired. At 405, the distance D from the obstacle to the desk surface is calculated based on H1 and H2. At 406, if the distance D is greater than the first threshold, it indicates that the desk surface is relatively far from the obstacle and the desk can be lowered. In this embodiment, the reason for lowering the desk may be various. For example, it may be because the user has maintained a standing posture for longer than the corresponding time threshold, or it may be lowered according to the user's instruction.

During the lowering process, 401 can be repeatedly executed to update the distance D. At 407, it is determined whether the current distance D between the desk surface and the obstacle is less than or equal to the second threshold. If greater (No), it indicates that the desk surface is still relatively far from the obstacle and can be lowered at a preset speed. Therefore, the process can return to 401 to repeat the above process, updating the distance D between the desk surface and the obstacle in real time. If less than or equal to the second threshold (Yes), it indicates that the desk surface is already very close to the obstacle, and further rapid lowering may result in a collision. At 408, it is further determined whether the distance D is less than or equal to the first threshold. If so, it means the desk surface is very close to the obstacle and is about to collide; therefore, at 409, lowering is stopped, and the process returns to 401, wherein the first threshold is less than the second threshold. If less than or equal to the second threshold and greater than the first threshold, at 410, the lowering speed of the height-adjustable desk can be gradually reduced to zero before contacting the obstacle, and the process returns to 401.

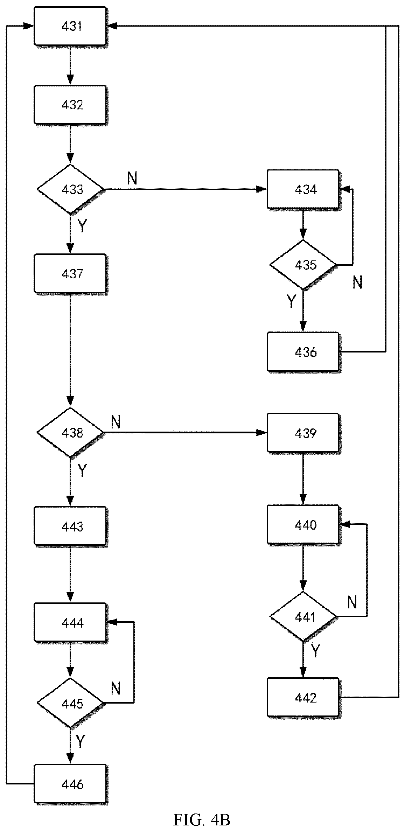

FIG. 4B is a block diagram of a reminder method according to another embodiment of the present disclosure. At 431, the infrared radar and/or ultrasonic radar on the desk emits electromagnetic waves and/or ultrasonic waves toward the front of the desk and receives the reflected electromagnetic waves and/or ultrasonic waves, thereby obtaining scan data.
The infrared radar and/or ultrasonic radar transmits the scan data to the controller, which can generate a point cloud 432 of the user based on the scan data.

At 433, it is determined whether the user is present based on the point cloud 432. If only a small amount of electromagnetic waves are reflected back, resulting in a sparse point cloud, it can be determined that the user is not present. If the point cloud does not conform to the human contour, it may also be determined that the user is not present. The absence of the user indicates that the user has been reminded to take a break. Upon determining that the user is not present, the user's departure time 434 (i.e., the second duration) may be timed. At 435, it is determined whether the duration of the user's absence has reached a third threshold value. If so, at 436, the user's absence time is reset to zero and the process proceeds to 431. If the threshold is not reached, the process returns to 434 to continue timing.

If the user is detected to be present, then at 437, the centroid of the user using the desk is determined based on the point cloud 432. At 438, the user's posture is determined. If the centroid is greater than the first standing posture threshold and less than the second standing posture threshold, and at the same time the current height of the desk is greater than the third standing posture threshold and less than the fourth standing posture threshold (i.e., the desk is at a height corresponding to the standing posture), the user's posture can be determined as standing 439. If the centroid is greater than the first sitting posture threshold and less than the second sitting posture threshold, and at the same time the current height of the desk is greater than the third sitting posture threshold and less than the fourth sitting posture threshold (i.e., the desk is at a height corresponding to the sitting posture), the posture can be determined as sitting 443. The method for setting the thresholds is not repeated here.

When the user's posture is determined to be standing 439, timing for the user's standing posture may begin at 440, and the duration for which the user maintains the standing posture is determined. At 441, it is determined whether this duration exceeds the time threshold corresponding to the standing posture (e.g., 30 minutes). If not, the process returns to 440 to continue timing. If so, then at 442, the duration is reset to zero, a reminder corresponding to the standing posture is issued to the user, and the process proceeds to 431.

When the user's posture is determined to be sitting 443, timing for the user's sitting posture may begin at 444, and the duration for which the user maintains the sitting posture is determined. At 445, it is determined whether this duration exceeds the time threshold corresponding to the sitting posture (e.g., 50 minutes). If not, the process returns to 444 to continue timing. If so, then at 446, the duration is reset to zero, a reminder corresponding to the sitting posture is issued to the user, and the process proceeds to 432 to reacquire the user's point cloud data. In some embodiments, the reminder corresponding to the sitting posture includes a pre-stored reminder audio (i.e., second reminder audio), for example, "You have been sitting for 30 minutes, please adjust your posture". In some embodiments, the desk is a height-adjustable desk. In addition to providing reminder audio corresponding to the sitting posture to the user, when it is determined that the user's posture is sitting and the duration exceeds the time threshold corresponding to the sitting posture, the height of the height-adjustable desk is also increased.

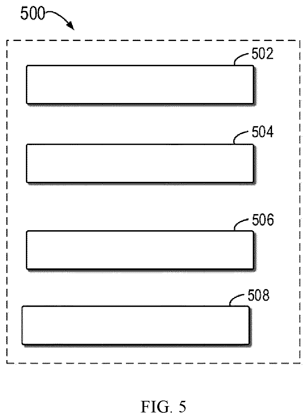

FIG. 5 is a schematic diagram of a reminder device according to an embodiment of the present disclosure. As shown in FIG. 5, the device 500 includes a centroid determination unit 502 configured to determine the centroid of a user utilizing the desk by means of a millimeter-wave radar. The device 500 further includes a posture determination unit 504 configured to determine the user's posture based on the centroid. The device 500 further includes a time determination unit 506 configured to determine a first duration for which the user maintains the posture. The device 500 further includes a reminder unit 508 configured to provide a corresponding reminder to the user in response to the first duration exceeding a time threshold.

In some embodiments, the centroid determination unit 502 includes a point cloud unit configured to acquire a point cloud of the user collected by the millimeter-wave radar on the desk. The centroid determination unit 502 further includes a first determination unit configured to determine the centroid based on the point cloud.

In some embodiments, the first determination unit includes a denoising unit configured to perform denoising processing on the point cloud. The first determination unit further includes a mass determination unit configured to determine the mass of the respective body parts of the user according to the user's mass. The first determination unit further includes a volume determination unit configured to determine the volume of the respective body parts of the user based on the point cloud. The first determination unit further includes a density determination unit configured to determine the density of the respective body parts based on the mass and volume of the respective body parts. The first determination unit further includes a weight determination unit configured to determine the weight of each point in the point cloud based on the density of the respective body parts. The first determination unit further includes a second determination unit configured to determine the centroid of the user based on the point cloud and the weights.

In some embodiments, the posture determination unit 504 includes a third determination unit configured to determine the posture as standing in response to the centroid being greater than the first standing posture threshold and less than the second standing posture threshold. The posture determination unit 504 further includes a fourth determination unit, configured to determine the posture as a sitting posture in response to the centroid being greater than a first sitting posture threshold and less than a second sitting posture threshold.

In some embodiments, the reminder unit 508 includes a standing posture audio playback unit, configured to provide a first reminder audio corresponding to the standing posture to the user in response to determining that the posture is a standing posture and the first duration exceeds a time threshold corresponding to the standing posture. The reminder unit 508 further includes a sitting posture audio playback unit, configured to provide a second reminder audio corresponding to the sitting posture to the user in response to determining that the posture is a sitting posture and the first duration exceeds a time threshold corresponding to the sitting posture. In some embodiments, the device 500 is applied to a height-adjustable desk, and the reminder unit 508 further includes a first adjustment unit, configured to increase the height of the desktop of the height-adjustable desk in response to determining that the posture is a sitting posture and the first duration exceeds the time threshold corresponding to the sitting posture. In some embodiments, the device 500 is applied to a height-adjustable desk, and the reminder unit 508 further includes a second height adjustment unit, configured to lower the height of the desktop of the height-adjustable desk in response to determining that the posture is a standing posture and the first duration exceeds the time threshold corresponding to the standing posture.

In some embodiments, the device 500 further includes a first detection unit, configured to detect, using a millimeter-wave radar, the distance from the height-adjustable desk to an obstacle beneath the desk. The device 500 further includes a second adjustment unit, configured to lower the height of the desktop of the height-adjustable desk in response to the distance being greater than the first threshold. The device 500 further includes an updating unit, configured to update the distance via the millimeter-wave radar. The device 500 further includes a buffering unit, configured to gradually reduce the lowering speed of the height-adjustable desk in response to the updated distance being less than or equal to the second threshold, wherein the first threshold is less than the second threshold.

In some embodiments, the device 500 further includes a third adjustment unit, configured to stop lowering in response to the distance being less than or equal to the first threshold.

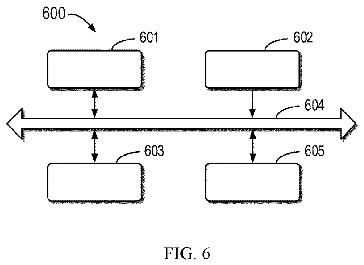

In some embodiments, the device 500 further includes a second detection unit, configured to detect, using a millimeter-wave radar, a second duration for which the user leaves the desk. The device 500 further includes a reset unit, configured to reset the second duration to zero in response to the second duration exceeding a third threshold. FIG. 6 is a schematic block diagram of a controller 600 suitable for implementing embodiments of the present disclosure. As shown in the figure, the controller 600 includes a processor 601, which may perform various appropriate actions and processing by loading computer program instructions stored in a read-only memory (ROM) 602 into a random access memory (RAM) 603.
Various programs and data required for the operation of the controller 600 may also be stored in the RAM 603. The processor 601, ROM 602, and RAM 603 are interconnected via a bus 604. An input/output (I/O) interface 605 is also connected to the bus 604.

The various methods and processes described above may be executed by the processor 601. For example, in some embodiments, the various methods and processes described above may be implemented as computer software programs tangibly embodied in a machine-readable medium. In some embodiments, part or all of the computer program may be loaded and/or installed onto the controller 600 via the ROM 602. When the computer program is loaded into the RAM 603 and executed by the processor 601, one or more actions of the methods and processes described above may be performed.

The present disclosure may be a method, device, system, and/or computer program product. A computer program product may include a computer-readable storage medium having computer-readable program instructions for carrying out various aspects of the present disclosure.

The computer-readable storage medium may be a tangible device that maintains and stores instructions used by instruction execution devices. The computer-readable storage medium can be, for example, but not limited to, an electronic storage device, magnetic storage device, optical storage device, electromagnetic storage device, semiconductor storage device, or any suitable combination of the foregoing. More specific examples (a non-exhaustive list) of the computer-readable storage medium comprise: Examples of computer-readable storage media include random access memory (RAM), read-only memory (ROM), erasable programmable read-only memory (EPROM or flash memory), static random access memory (SRAM), and any suitable combination of the foregoing. The computer-readable storage medium as used herein is not to be construed as including transitory signals per se, such as radio waves or other freely propagating electromagnetic waves, electromagnetic waves propagated through waveguides or other transmission media (e.g., optical pulses through fiber optic cables), or electrical signals transmitted through wires.

The computer-readable program instructions described herein can be downloaded to respective computing/processing devices from a computer-readable storage medium or to an external computer or external storage device via a network, for example, the Internet, a local area network, a wide area network, and/or a wireless network. The network can comprise copper transmission cables, fiber optic transmission, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

The computer program instructions for performing operations of the present disclosure can be assembly instructions, instruction set architecture instructions, machine instructions, machine-dependent instructions, microcode, firmware instructions, state-setting data, or source code or object code written in any combination of one or more programming languages, wherein the programming languages comprise object-oriented programming languages-such as Smalltalk, C++, etc.-and conventional procedural programming languages-such as the "C" programming language or similar programming languages. The computer-readable program instructions may be executed entirely on the user's computer, partly on the user's computer, as a stand-alone software package, partly on the user's computer and partly on a remote computer, or entirely on a remote computer or server. In the case of remote computers, the remote computer can be connected to the user's computer through any type of network-such as a local area network (LAN) or a wide area network (WAN)-or can be connected to an external computer (for example, through the Internet using an Internet Service Provider). In some embodiments, electronic circuits, such as programmable logic circuits, field-programmable gate arrays (FPGA), or programmable logic arrays (PLA), can be personalized by utilizing state information of the computer-readable program instructions, which can execute the computer-readable program instructions to implement various aspects of the present disclosure.

Various aspects of the present disclosure are described herein with reference to flowcharts and/or block diagrams of methods, devices (systems), and computer program products according to embodiments of the present disclosure. It should be understood that each block of the flowcharts and/or block diagrams, as well as combinations of blocks in the flowcharts and/or block diagrams, can be implemented by computer-readable program instructions.

These computer-readable program instructions may be supplied to a general-purpose computer, a special-purpose computer, or other programmable data processing apparatus to produce a machine, such that the instructions, when executed by the processing unit of the computer or other programmable data processing apparatus, create means for implementing the functions/actions specified in one or more blocks of the flowcharts and/or block diagrams. These computer-readable program instructions may also be stored on a computer-readable storage medium, which can cause a computer, programmable data processing apparatus, and/or other devices to function in a particular manner. Accordingly, a computer-readable medium storing the instructions constitutes an article of manufacture that includes instructions for implementing various aspects of the functions/actions specified in one or more blocks of the flowcharts and/or block diagrams.

The computer-readable program instructions may also be loaded onto a computer, other programmable data processing apparatus, or other devices, causing a series of operational steps to be performed on the computer, other programmable data processing apparatus, or other devices to produce a computer-implemented process, such that the instructions executed on the computer, other programmable data processing apparatus, or other devices implement the functions/actions specified in one or more blocks of the flowcharts and/or block diagrams.

The flowcharts and block diagrams in the accompanying drawings illustrate possible system architectures, functionalities, and operations for systems, methods, and computer program products according to multiple embodiments of the present disclosure. In this regard, each block in the flowcharts or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It should also be noted that each block of the block diagrams and/or flowcharts, and combinations of blocks in the block diagrams and/or flowcharts, can be implemented by special-purpose hardware-based systems that perform the specified functions or actions, or by combinations of special-purpose hardware and computer instructions.

The above description of the various embodiments of the present disclosure is exemplary and not intended to be exhaustive or limited to the disclosed embodiments. Many modifications and variations will be apparent to those of ordinary skill in the art without departing from the scope and spirit of the described embodiments. The terminology used herein is selected to best explain the principles of the embodiments, the practical application or improvements to the technology in the marketplace, or to enable others of ordinary skill in the art to understand the embodiments disclosed herein.

## Claims

1. A reminder method (200), comprising:
determining (202) the centroid of a user utilizing a desk by means of a millimeter-wave radar;
determining (204) the posture of the user based on the centroid;
determining (206) a first duration for which the user maintains the posture; and
in response to the first duration exceeding a time threshold, providing (208) a reminder to the user.

2. The method (200) according to claim 1, wherein determining (202) the centroid of the user utilizing the desk by means of a millimeter-wave radar comprises:
acquiring a point cloud of the user collected by the millimeter-wave radar on the desk; and
determining the centroid based on the point cloud.

3. The method (200) according to claim 2, wherein determining the centroid based on the point cloud comprises:
denoising the point cloud;
determining the mass of respective body parts of the user according to the user's mass;
determining the volume of the respective body parts of the user based on the point cloud;
determining the density of the respective body parts based on the mass and volume of the respective body parts;
determining the weight of each point in the point cloud based on the density of the respective body parts; and
determining the centroid of the user based on the point cloud and the weights.

4. The method (200) according to claim 1, wherein determining (204) the posture of the user based on the centroid comprises:
in response to the centroid being greater than a first standing posture threshold and less than a second standing posture threshold, determining the posture as standing; and
in response to the centroid being greater than a first sitting posture threshold and less than a second sitting posture threshold, determining the posture as sitting.

5. The method (200) according to claim 4, wherein providing (208) a reminder to the user comprises:
in response to determining the posture as standing and the first duration exceeding a time threshold corresponding to the standing posture, providing a first reminder audio corresponding to the standing posture to the user; and
in response to determining the posture as sitting and the first duration exceeding a time threshold corresponding to the sitting posture, providing a second reminder audio corresponding to the sitting posture to the user.

6. The method (200) according to claim 5, wherein the desk is a height-adjustable desk, the method further comprising:
in response to determining the posture as sitting and the first duration exceeding the time threshold corresponding to the sitting posture, increasing the height of the desktop of the height-adjustable desk.

7. The method (200) according to claim 5, applied to a height-adjustable desk, wherein the desk is a height-adjustable desk, and the method further comprises:
in response to determining the posture as standing and the first duration exceeding the time threshold corresponding to the standing posture, lowering the height of the desktop of the height-adjustable desk.

8. The method (200) according to claim 7, wherein lowering the height of the desktop of the height-adjustable desk comprises:
detecting, using the millimeter-wave radar, the distance from the height-adjustable desk to an obstacle beneath the desk;
in response to the distance being greater than a first threshold, lowering the height of the desktop of the height-adjustable desk;
updating the distance via the millimeter-wave radar; and
in response to the updated distance being less than or equal to a second threshold, gradually reducing the lowering speed of the height-adjustable desk, wherein the first threshold is less than the second threshold.

9. The method (200) according to claim 8, further comprising:
in response to the distance being less than or equal to the first threshold, stopping the lowering.

10. The method (200) according to claim 1, further comprising:
detecting, using the millimeter-wave radar, a second duration for which the user leaves the desk; and
in response to the second duration exceeding a third threshold, resetting the second duration to zero.

11. A desk (110), comprising:
a controller (112);
a millimeter-wave radar (114), connected to the controller (112), configured to emit millimeter waves and receive reflected millimeter waves;
a speaker (116), connected to the controller (112), configured to play audio;
wherein the controller (112) is configured to:
determine the centroid of a user utilizing the desk by means of the millimeter-wave radar;
determine the posture of the user based on the centroid;
determine a first duration for which the user maintains the posture; and
in response to the first duration exceeding a time threshold, provide a reminder to the user via the speaker.

12. The desk (110) according to claim 11, further comprising:
a lifting column (118), connected to the controller (112);
wherein the controller (112) is further configured to:
in response to the posture being sitting and the first duration for which the user maintains the sitting posture exceeding the time threshold corresponding to the sitting posture, control the lifting column to increase the height of the desk.

13. A reminder device (500), comprising:
a centroid determination unit (502), configured to determine the centroid of a user utilizing a desk by means of a millimeter-wave radar;
a posture determination unit (504), configured to determine the posture of the user based on the centroid;
a time determination unit (506), configured to determine a first duration for which the user maintains the posture; and
a reminder unit (508), configured to provide a reminder to the user in response to the first duration exceeding a time threshold.

14. A controller, comprising:
at least one processor, and
a memory coupled to the at least one processor and having instructions stored thereon,
the instructions, when executed by the at least one processor, cause the controller to perform the method according to any one of claims 1-10.

15. A computer program product, tangibly stored on a non-transitory computer-readable medium and comprising machine-executable instructions, wherein the machine-executable instructions, when executed, cause a machine to perform the method according to any one of claims 1 to 10.
